# FASCICULE DE BREVET EUROPEEN

(11) **EP 2 539 952 B1**
(45) Date de publication et mention de la délivrance du brevet: **15.03.2017**
(21) Numéro de dépôt: 11710001.6
(22) Date de dépôt: 21.02.2011
(51) Int. Cl.: H01M 2/16, H01M 4/58, H01M 10/0525, H01M 4/485

(54) **ACCUMULATEUR LITHIUM-ION PRESENTANT UNE FORTE PUISSANCE**
HOCHLEISTUNGS-LITHIUMIONENAKKUMULATOR
HIGH POWER LITHIUM ION STORAGE BATTERY

(30) Priorité: 25.02.2010 FR 1000775
(43) Date de publication de la demande: 02.01.2013
(73) Titulaire: Commissariat à l'Énergie Atomique et aux Énergies Alternatives, 75015 Paris (FR)
(72) Inventeur: CHAMI, Marianne, F-38600 Fontaine (FR); MARTINET, Sébastien, F-38210 Saint Quentin Sur Isère (FR); MASSE, Florence, F-38100 Grenoble (FR)
(74) Mandataire: Talbot, Alexandre
(86) Numéro de dépôt international: PCT/FR2011/000106
(87) Numéro de publication internationale: WO 2011/104445

(56) Documents cités:
- WO-A2-2009/066916
- US-A1- 2006 068 282
- US-A1- 2009 148 759

## Description

### Domaine technique de l'invention

L'invention concerne un accumulateur Lithium-Ion.

### État de la technique

La technologie Lithium-Ion, introduite sur le marché en 1990, est actuellement largement implantée dans le domaine des applications nomades (téléphonie mobile, ordinateurs portables,...), où elle remplace progressivement les accumulateurs nickel-cadmium (NiCd) et nickel-hydrure métallique (NiMH). Cette évolution s'explique par l'amélioration continue des performances des accumulateurs au lithium, leur conférant ainsi des densités d'énergie massique et volumique nettement supérieures à celles proposées par les filières NiCd et NiMH.

Contrairement à l'électrode négative d'un accumulateur Lithium-Métal, l'électrode négative d'un accumulateur Lithium-Ion (également appelé Li-Ion) ne constitue pas une source de lithium pour l'électrode positive. Ainsi, dans un système Lithium-Ion, l'électrode négative comporte généralement un matériau actif formé par un matériau d'intercalation ou d'insertion du lithium, tel que le carbone de forme graphite et le lithium provient du matériau actif de l'électrode positive. Les cations Li⁺ font, alors, des allers-retours entre les électrodes, respectivement négative et positive, à chaque charge et décharge de l'accumulateur. Ainsi, le lithium ne se trouve jamais sous forme métallique dans un accumulateur Li-Ion.

La technologie Li-Ion actuellement commercialisée est basée sur l'intercalation réversible de lithium issu d'un matériau actif de l'électrode positive dans le graphite qui forme le matériau actif de l'électrode négative. Le matériau actif de l'électrode positive est généralement un oxyde lamellaire de type LiCoO₂, LiNiO₂ et les oxydes mixtes Li(Ni, Co, Mn, Al)O₂ ou bien un composé de structure spinelle de composition proche de LiMn₂O₄.

Ce système Li-Ion, et notamment le système à base d'oxyde lamellaire et de graphite, est désormais à maturité pour les applications nomades. Cependant, il n'est pas adapté aux applications présentant des besoins énergétiques nettement plus importants, telles que le véhicule électrique ou hybride, les applications stationnaires et les énergies renouvelables. En effet, les matériaux actifs et notamment les oxydes lamellaires présentent un coût élevé et ils posent des problèmes de sécurité car les phases lamellaires et le graphite sont relativement instables, respectivement à l'état chargé et à l'état déchargé. En outre, l'utilisation du graphite comme matériau actif d'électrode négative impose une limitation sur la densité de courant, en particulier en fin de charge. En effet, le graphite de l'électrode négative des accumulateurs Li-Ion présente un potentiel de fonctionnement (∼100 mV vs. Li⁺/Li) très proche de celui du dépôt de lithium métal. Ainsi, des dendrites de lithium peuvent se former occasionnellement, ce qui risque de provoquer des courts-circuits et une explosion, d'autant plus que la densité de courant est élevée et que l'on maintient un courant constant en fin de charge.

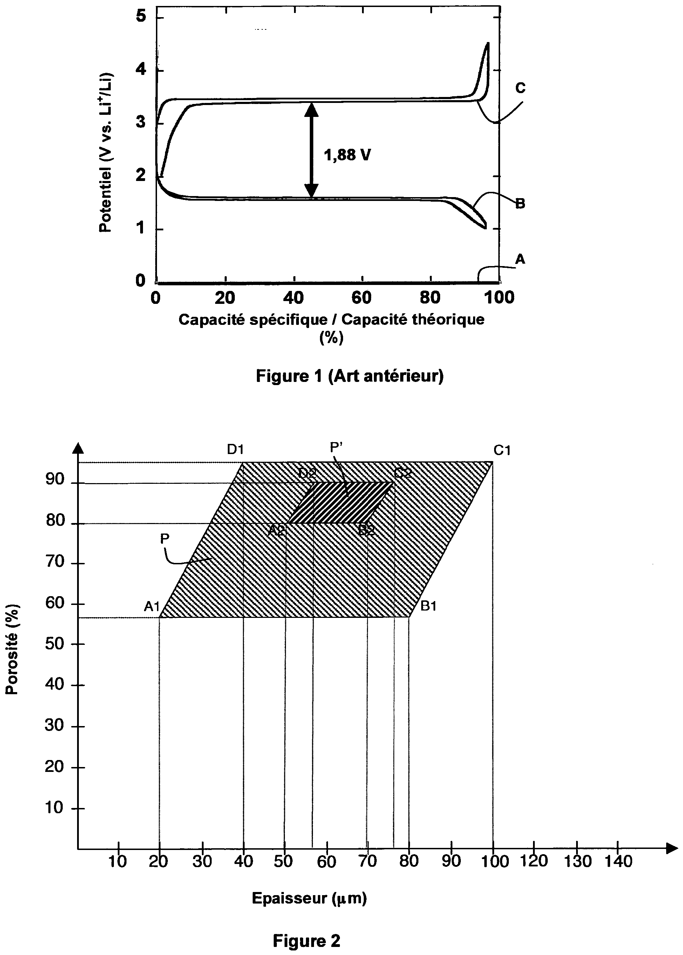

De récents développements de matériaux d'électrode proposent de remplacer le graphite de l'électrode négative par l'oxyde de titane lithié Li₄Ti₅O₁₂. La réaction d'insertion/extraction de lithium dans le couple Li₄Ti₅O₁₂/Li₇Ti₅O₁₂ est la suivante : 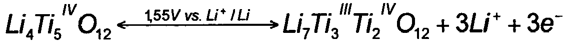 Cette réaction est biphasée, c'est-à-dire qu'elle présente un potentiel d'insertion/désinsertion par rapport au potentiel d'insertion/désinsertion du couple Li⁺/Li constant. Le potentiel d'insertion/désinsertion d'un matériau par rapport au potentiel d'insertion/désinsertion du couple Li+/Li est également appelé, de manière simplifiée, potentiel d'insertion/désinsertion du lithium ou potentiel de fonctionnement de l'électrode. Comme représenté sur la figure 1, le potentiel d'insertion/désinsertion du lithium du couple Li₄Ti₅O₁₂/Li₇Ti₅O₁₂ (Courbe B) est égal à 1,55 Volts par rapport au potentiel d'insertion/désinsertion du couple Li⁺/Li (Courbe A), soit 1,55 V vs. Li⁺/Li. Un tel potentiel permet de s'affranchir du risque de formation de dendrite. De plus, le composé Li₄Ti₅O₁₂ permet l'insertion réversible de trois moles d'ions lithium, audit potentiel. Li₄Ti₅O₁₂ présente, en plus, une grande stabilité chimique et thermique, il est non toxique et il présente une grande efficacité électrochimique... La chimie du titane permet, par ailleurs, la réalisation de tout un éventail de morphologies (texture, taille...) de Li₄Ti₅O₁₂, en particulier de taille nanométrique. Ceci peut permettre une insertion/extraction rapide, donc une utilisation pour des applications de puissance. Ainsi, Li₄Ti₅O₁₂ est un matériau apte à remplacer le graphite comme matériau d'électrode négative dans certaines applications notamment celles liées au transport électrique ou hybride ainsi qu'au stockage stationnaire intermittent.

Des développements sont également en cours pour le matériau actif de l'électrode positive. Ainsi, le phosphate de fer lithié LiFePO₄, de structure olivine, est depuis quelques années considéré comme un matériau d'électrode positive de choix pour certaines nouvelles applications, telles que l'automobile hybride, l'outillage portatif ou les systèmes photovoltaïques. L'extraction du lithium dans LiFePO₄ se déroule selon le processus biphasé et réversible suivant : 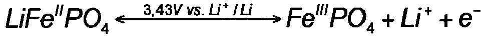 La capacité spécifique du matériau est de 170 mAh/g à un potentiel d'insertion/désinsertion du lithium de 3,4 V vs. Li⁺/Li (courbe C sur figure 1). La densité d'énergie massique théorique de LiFePO₄, qui correspond à la valeur de la capacité spécifique multipliée par la valeur du potentiel d'insertion/désinsertion du lithium du couple LiFePO₄/FePO₄ (soit 3,43 V vs. Li⁺/Li), est de l'ordre de 580 Wh/kg et elle est donc supérieure à la valeur pratique obtenue avec LiCoO₂ et les autres oxydes lamellaires commerciaux (typiquement 530 Wh/kg). Ainsi, ce composé peut être considéré comme une alternative crédible à LiCoO₂ et ses dérivés sur le marché des accumulateurs Li-Ion. De plus, il est possible d'atteindre pratiquement les performances théoriques, notamment en procédant à un enrobage particulier des particules de LiFePO₄, qui est relativement mauvais conducteur électronique, par du carbone de manière à obtenir un matériau composite LiFePO₄/C. Ainsi, l'utilisation dans un accumulateur au lithium de LiFePO₄ s'avère fortement intéressante non seulement grâce aux performances intrinsèques du matériau LiFePO₄ mais également grâce à sa grande stabilité thermique et chimique, sa faible toxicité et son coût modéré par rapport à celui des composés au cobalt ou au nickel par exemple.

Le couple LiFePO₄/ Li4Ti₅O₁₂ suscite donc un fort engouement en raison des performances intrinsèques des deux composés. Ainsi, l'association d'une électrode positive à base de LiFePO4 et d'une électrode négative à base de Li₄Ti₅O₁₂ a, par exemple, été reportée dans l'article « Optimized Lithium Iron Phosphate for High-Rate Electrochemical Applications » (Journal of The Electrochemical Society, 151(7) A1024-A1027 (2004)) de S. Franger et al.. Ce type d'accumulateur Li-Ion est, en effet, très intéressant puisqu'il utilise des matériaux non toxiques, de grande robustesse, avec notamment une durée de vie prolongée, stables et pouvant fonctionner à des régimes de courant élevés avec des pertes de capacité modérées par rapport à un cyclage à de faibles densités de courant.

Par ailleurs, dans les accumulateurs Li-Ion, l'électrolyte est, en général, formé d'au moins un sel de lithium très stable, tel que LiPF₆, dissous dans un ou plusieurs solvants organiques présentant une large fenêtre de potentiel (c'est-à-dire pour un potentiel compris entre 0 à 4,1 V vs. Li⁺/Li). Un tel électrolyte liquide imbibe un élément séparateur, disposé entre les électrodes positive et négative. De manière classique, l'élément séparateur est une feuille microporeuse d'une épaisseur très fine (épaisseur typiquement inférieure à 25 microns), à base d'au moins un matériau polymère de la famille des polyoléfines, telles que le polypropylène (PP), le polyéthylène (PE) ou un mélange des deux. Les éléments séparateurs les plus utilisés sont ceux commercialisés par la société Celgard, tels que la gamme de séparateurs monocouches PP Celgard®, la gamme de séparateurs monocouches PE Celgard® et la gamme de séparateurs tricouches PP/PE/PP Celgard®.

De tels éléments séparateurs ont, en particulier, été privilégiés car leur faible épaisseur permet de limiter la distance entre les électrodes positive et négative et donc de compenser la relative mauvaise conductivité des ions Li⁺ du ou des solvants organiques utilisés pour l'électrolyte liquide, en comparaison à des électrolytes aqueux. De plus, des tels éléments séparateurs présentent une tortuosité et une porosité suffisantes pour éviter la mise en court-circuit des électrodes, via la formation de dendrites à l'électrode négative, lorsque celle-ci est en carbone graphite.

Ainsi, de manière classique, dans l'article de S. Franger et al., le couple LiFePO₄/ Li₄Ti₅O₁₂ a été associé à un séparateur formé par un séparateur formé d'un élément séparateur monocouche en polypropylène, imbibé d'un électrolyte constitué d'une solution d'1M de LiPF₆ dans un mélange de carbonate d'éthylène (EC) et de carbonate de diméthyle (DMC), avec un rapport de 1 : 1 en volume.

Cependant, les éléments séparateurs à base de PP et/ou de PE, tels que ceux de la gamme Celgard®, ont une porosité inférieure ou égale à 55%. De plus, les polymères PE et PP sont des polymères sensibles à des températures élevées. En particulier, ils se dégradent respectivement à partir de 115°C (température de fusion du PE est comprise entre environ 125°C et 135°C) et de 130°C (température de fusion du PP est comprise entre environ 160°C et 165°C). Or, cette sensibilité des polymères PP et PE à des températures supérieures à 130°C peut être rédhibitoire pour certaines applications extrêmes. Il y a, de plus, un risque de dégradation de l'élément séparateur lors de l'opération de thermo-scellage réalisée à une température supérieure à 130°C, pendant l'emballage final de l'accumulateur. Enfin, pour les éléments séparateurs contenant du polyéthylène, le choix du couple de matériaux utilisés comme matériaux actifs pour les électrodes négative et positive de l'accumulateur au lithium est limité par le potentiel d'insertion et de désinsertion du lithium desdits matériau, car le PE s'oxyde lorsqu'il est soumis à une tension supérieure ou égale à 4,2V.

Dans l'article « A novel intrinsically porous separator for self-standing lithium ion batteries » de Pier Paolo Prosini et al. (Electrochimica Acta 48 (2002) 227-233), les auteurs proposent un élément séparateur intrinsèquement poreux, autosupporté et susceptible d'être laminé à chaud et sous pression sans perdre sa capacité à pouvoir être imprégné d'électrolyte liquide. L'élément séparateur est formé par un matériau composite comprenant une matrice polymère constituée par le copolymère poly(fluorure de vinylidène-hexafluoropropylène), également noté PVdF-HFP, et des charges en oxyde inorganique, tel que LiAlO₂, Al₂O₃ ou MgO. Il est, de plus imbibé d'une solution d'1M de LiPF₆ dans un mélange de 1 : 1 de EC/DMC et il est utilisé avec le couple LiMn₂O₄/Carbone graphite respectivement pour le matériau actif cathodique et le matériau actif anodique.

La demande US2009/148759 décrit un accumulateur au lithium utilisant un séparateur en papier non tissé tel que le TF40 produit par Nippon Kodosfi Corp.

### Objet de l'invention

L'invention a pour but de proposer un accumulateur Li/Ion, capable de délivrer une très forte puissance tout en étant peu coûteux, afin notamment de pouvoir être utilisé dans des applications liées au transport électrique ou hybride ou bien au stockage d'énergie intermittent.
Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente les courbes de tension en fonction du rapport entre la capacité spécifique et la capacité théorique (régime de charge/décharge équivalent à C/5) d'un accumulateur Lithium/Métal comprenant une électrode positive respectivement à base de Li (Courbe A), de Li₄Ti₅O₁₂ (Courbe B) et de LiFePO₄ (Courbe C).
- la figure 2 représente graphiquement les plages de porosité et d'épaisseur avantageusement choisies pour un élément séparateur selon l'invention.
- la figure 3 représente un cliché obtenu par microscopie électronique à balayage d'un non tissé à base de fibres de verre.
- la figure 4 représente l'évolution de la tension de fonctionnement d'un accumulateur Li-Ion basé sur le couple de matériaux actifs LiFePO₄/Li₄Ti₅O₁₂, en fonction du pourcentage en capacité à un régime de cyclage C/10, avec deux séparateurs différents, l'un commercialisé par la société Celgard sous la référence C480 (tricouche PP/PE/PP), l'autre formé d'un non tissé à base de fibres de verre.
- la figure 5 représente l'évolution de la capacité d'un accumulateur Li-Ion selon l'invention en fonction du nombre de cycles.

### Description de modes particuliers de réalisation

Selon un mode particulier de réalisation, il est proposé d'associer le couple de matériaux actifs LiFePO₄/ Li₄Ti₅O₁₂ formant les matériaux actifs respectifs des électrodes positive et négative avec un élément séparateur particulier, formé par un non tissé à base de fibres.

Une telle association permet, en effet, d'obtenir un accumulateur Li-Ion capable de délivrer une très forte puissance tout en étant peu coûteux.

Par définition, un non tissé est une feuille manufacturée, constituée de voile ou de nappe de fibres orientées dans une direction particulière ou bien au hasard, liées par friction et/ou cohésion et/ou adhésion, à l'exclusion du papier et des produits obtenus par tissage, tricotage,...

De plus, les fibres sont des microfibres et/ou des nanofibres, c'est-à-dire des fibres de dimensions micrométriques (microfibres) et/ou nanométriques (nanofibres). Par dimensions micrométriques, on entend des dimensions comprises entre 0,5 µm et 10 µm et avantageusement de l'ordre de 1 µm et par dimensions nanométriques, on entend des dimensions comprises entre 1 nm et 100 nm et avantageusement de l'ordre de la dizaine de nanomètres.

Enfin, les fibres sont choisies de manière à être :
- isolantes électriquement,
- stables chimiquement vis-à-vis des composants de l'électrolyte liquide utilisé et en particulier vis-à-vis des solvants carbonatés utilisés,
- stables également vis-à-vis des matériaux actifs utilisés pour les électrodes positive et négative, et
- stables thermiquement dans le domaine de températures de fonctionnement de la batterie (généralement entre -20°C à +60°C).

Les fibres sont, plus particulièrement, choisies parmi les fibres de cellulose et les fibres de verre.

Les fibres de verre sont, en particulier, des fibres formées à partir d'un ou plusieurs matériaux amorphes, avantageusement sous forme d'oxydes tels que SiO₂, Al₂O₃, CaO, MgO, Na₂O₃, ...

De manière préférée, le séparateur est un non tissé constitué de fibres de verre ou de fibres de cellulose, de dimensions micrométriques et/ou nanométriques.

Par ailleurs, l'élément séparateur présente, avantageusement, une porosité, c'est-à-dire un pourcentage de volume vide par rapport au volume total de l'élément séparateur, comprise entre 56% et 95% et avantageusement entre 80% et 90% inclus.

Afin d'assurer une tenue mécanique satisfaisante à l'élément séparateur dans l'accumulateur Li-Ion, un bon compromis entre l'épaisseur dudit élément séparateur et la porosité de ce dernier est, en général, nécessaire. Ainsi, selon l'enchevêtrement des fibres les unes par rapport aux autres, et pour des applications en puissance, l'épaisseur de l'élément séparateur formé par un non tissé varie, de préférence entre environ 20 µm pour une porosité de 56% et environ 100µm pour une porosité de 95%. Plus particulièrement, l'épaisseur et la porosité sont, avantageusement, choisies de manière à se situer dans une plage P de valeurs, représentée sur la figure 2 sous la forme d'un parallélogramme délimité par les points A1, B1, C1 et D1 et dont les coordonnées sont respectivement :
A1 : 56% de porosité pour environ 20µm
B1 : 56% de porosité pour environ 80µm
C1 : 95% de porosité pour environ 100µm
D1 :95% de porosité pour environ 40µm.

Plus avantageusement encore, l'épaisseur et la porosité sont, avantageusement, choisies de manière à se situer dans une plage préférentielle P' de valeurs, représentée sur la figure 2 sous forme d'un parallélogramme délimité par les points A2, B2, C2 et D2 dont les coordonnées sont respectivement :
A2 : 80% de porosité pour environ 50µm
B2 : 80% de porosité pour environ 70µm
C2 : 90% de porosité pour environ 56µm
D2 :90% de porosité pour environ 76µm.

De plus, l'élément séparateur présente, par sa structure de non tissé à base de fibres de dimensions micrométriques et/ou nanométriques, une très bonne capacité d'imprégnation pour l'électrolyte liquide. En particulier, cette capacité d'imprégnation peut être caractérisée en mesurant le temps écoulé (appelé temps d'imprégnation) entre l'instant initial où une goutte d'électrolyte est déposée à la surface de l'élément séparateur (angle de contact θ initial à t=0 correspondant à la mouillabilité de l'électrolyte liquide sur ladite surface) et l'instant où ledit angle de contact θ tend vers zéro, du fait de l'imprégnation de ladite goutte dans le non tissé. Dans le cas des non tissés à base de microfibres et/ou de nanofibres, le temps d'imprégnation est inférieur ou égal à 1 seconde, ce qui caractérise la très bonne capacité d'imprégnation du non tissé vis-à-vis de l'électrolyte liquide.

Enfin, la structure de non tissé à base de fibres de dimensions micrométriques et/ou nanométriques permet à l'élément séparateur d'être compressible. Cette caractéristique est particulièrement avantageuse pour améliorer le contact entre l'élément séparateur et chacune des électrodes, notamment lorsque celles-ci présentent des déformations ou des irrégularités. En particulier, ceci est intéressant dans le cas d'accumulateurs Li-Ion bipolaires pour lesquels les électrodes présentent des ondulations ou des déformations après calandrage.

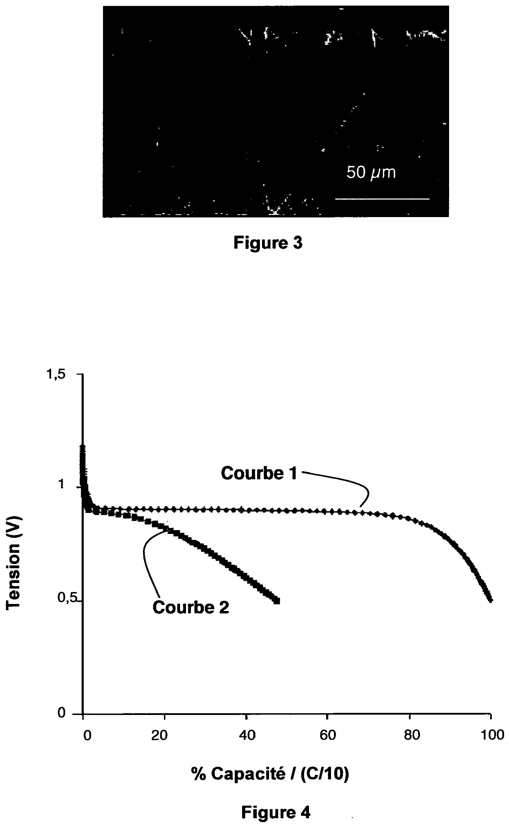

À titre d'exemple, un non tissé à base de microfibres de verre, de type C utilisé comme élément séparateur pour accumulateur Li-Ion est illustré sur la figure 3. Il présente une porosité de 90% et une épaisseur de 76µm et les microfibres ont des dimensions variant entre 0,1µm à 10 µm. De plus, le non tissé est compressible de moitié.

Il a été interposé entre deux feuillards formant respectivement l'électrode positive et l'électrode négative et l'ensemble constitue un accumulateur Li-Ion de type pile bouton. Le feuillard pour chacune des électrodes est, par exemple, obtenu à partir d'un mélange (ou encre) comprenant le matériau actif (LiFePO₄ pour l'électrode positive et Li₄Ti₅O₁₂ pour l'électrode négative) avec un additif conducteur électronique, tel que du carbone, et un liant destiné à apporter une bonne conduction ionique et une tenue mécanique satisfaisante. Le liant peut être un liant organique, tel que les polyéthers, le polyesters, un polymère à base de méthacrylate de méthyle, l'acrylonitrile, le fluorure de vinylidène ou bien un composé soluble dans l'eau, tel que le caoutchouc naturel ou synthétique. Les proportions massiques classiquement utilisées sont de l'ordre de 80% pour le matériau actif, 10% pour l'additif conducteur électronique et 10% pour le liant. Le mélange obtenu est, ensuite, étalé sur une feuille d'aluminium servant de collecteur de courant et séché pour évaporer les solvants résiduels avant que l'électrode obtenue ne soit calandrée à chaud (par exemple à 80°C), afin d'obtenir la porosité requise pour un fonctionnement optimal de l'accumulateur Li-Ion.

Contrairement au couple de matériaux actifs LiCoO₂/C qui peut entraîner la formation de dendrites et donc créer des courts-circuits par l'intermédiaire de l'élément séparateur, le fait d'utiliser le couple de matériaux actifs LiFePO₄/Li₄Ti₅O₁₂ pour former l'accumulateur Li-Ion apporte une sécurité audit accumulateur. De plus, un tel couple peut être associé avec un élément séparateur constitué par un non tissé de très forte porosité.

Par ailleurs, les frais pour réaliser un tel accumulateur sont réduits car le matériau LiFePO₄ est considéré comme un matériau à faible coût en comparaison aux oxydes lamellaires. De plus, une électrode à base Li₄Ti₅O₁₂ est moins chère qu'une électrode en graphite car il est possible, avec Li₄Ti₅O₁₂, d'utiliser un collecteur de courant en aluminium à la place du cuivre. Enfin, le procédé de fabrication d'un non tissé à base de fibres de verre ou de cellulose est moins coûteux que des éléments microporeux à base de polyoléfines tels que ceux actuellement commercialisés, qui nécessitent dans certains cas le calaminage de trois feuilles d'épaisseurs micrométriques, avant étirement.

À titre d'exemple, la figure 4 illustre les performances de deux accumulateurs Li-Ion comprenant chacun le couple de matériaux actifs LiFePO₄/Li₄Ti₅O₁₂ et destiné à être utilisé pour des applications de transport hybride (HEV), à une échelle d'1/4, et ayant une capacité de 150mAh. L'élément séparateur est dans un cas (courbe 1) un non tissé constitué de microfibres de verre d'une épaisseur de 76µm et d'une porosité de l'ordre de 90% et, dans l'autre cas (Courbe 2), il s'agit d'un séparateur commercialisé par la société Celgard sous la référence C480 (tricouche PP/PE/PP) d'une épaisseur de 21,5 µm et d'une porosité de 50%. Dans les deux cas, les accumulateurs au lithium sont cyclés à un régime C/10 à 20°C et l'électrolyte utilisé est un mélange de solvants organiques EC/PC/DMC (rapport 1 :1 :1) dans lequel est dissous 1 M de LiBETi (Lithium bis(perfluorosulfonyl)imide ou LiN(C₂F₅SO₂)₂. La surface d'imprégnation des éléments séparateurs est de l'ordre de 150 cm².

Ainsi, alors qu'aucune précaution d'imprégnation n'est utilisée pour améliorer l'imprégnation des deux éléments séparateurs, on observe par comparaison des courbes 1 et 2, que l'excellente mouillabilité de l'élément séparateur formé par le non tissé à base de microfibres de verre permet d'obtenir (contrairement aux séparateurs commerciaux) toute la capacité de l'accumulateur à régime C/10. Cette caractéristique permet, alors, de s'affranchir des étapes nécessaires à l'imprégnation des séparateurs commerciaux (en particulier, la réalisation de plusieurs cycles pendant lesquels l'accumulateur au lithium est tiré sous vide).

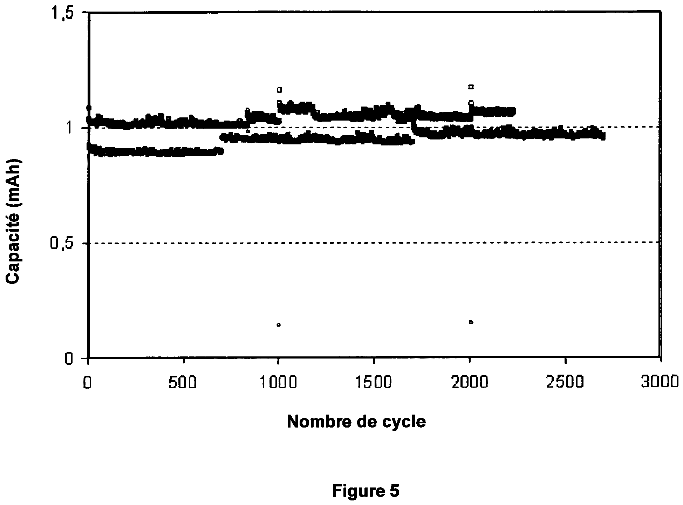

De plus, comme illustré sur la figure 5, un accumulateur Li-Ion de format pile bouton, cyclé à régime accéléré (5C), présente, avec le couple LiFePO₄/Li₄Ti₅O₁₂ et un élément séparateur non tissé à base de microfibres de verre, des performances stables. L'électrolyte utilisé est un mélange de solvants organiques EC/PC/DMC (rapport 1 :1 :1) dans lequel est dissous 1M de LiBETi (Lithium bis(perfluorosulfonyl)imide ou LiN(C₂F₅SO₂)₂. Par ailleurs, on constate que les performances de la pile sont stables sur plus de 2000 cycles et qu'aucune dendrite n'est formée pendant l'opération de test (doublé) sur plus de 2500 cycles.

Il est à noter que, dans le cadre de l'invention, Li₄Ti₅O₁₂ peut être remplacé par un autre matériau actif d'électrode négative présentant un potentiel d'insertion/désinsertion du lithium supérieur ou égal à 0,5V vs. Li⁺/Li, choisi parmi un autre oxyde de titane lithié, un dérivé d'oxyde de titane lithié, un oxyde de titane non lithié, tel que TiO₂ et un dérivé d'un oxyde titane non lithié. Par dérivé d'oxyde de titane lithié, on entend des composés de formule Li₍₄₋ₓ₎MₓTi₅O₁₂ et Li₄Ti_{(5-y)}NyO₁₂, où x et y sont respectivement compris entre 0 et 0,2 et M et N sont, respectivement, des éléments chimiques choisis parmi Na, K, Mg, Nb, Al, Ni, Co, Zr, Cr, Mn, Fe, Cu, Zn, Si et Mo. Par dérivé d'oxyde de titane non lithié, on entend les composés de formule Ti_{(5-y)}NyO₁₂, avec y compris entre 0 et 0,2 et N est un élément chimique choisi parmi Na, K, Mg, Nb, Al, Ni, Co, Zr, Cr, Mn, Fe, Cu, Zn, Si et Mo. Li₄Ti₅O₁₂ peut aussi être remplacé par un mélange de plusieurs composés : oxydes de titane lithiés ou non et/ou dérivés d'oxydes de titane lithié ou non.

## Revendications

1. Accumulateur Lithium-Ion **caractérisé en ce qu'**il comporte :
- LiFePO₄ comme matériau actif d'électrode positive,
- un matériau actif d'électrode négative présentant un potentiel d'insertion/désinsertion du lithium supérieur ou égal à 0,5V vs. Li⁺/Li, choisi parmi un oxyde de titane lithié, un dérivé d'un oxyde de titane lithié, un oxyde de titane non lithié, un dérivé d'un oxyde de titane non lithié et un mélange de ceux-ci,
- et un élément séparateur disposé entre les électrodes positive et négative, formé d'un non tissé à base de fibres de dimensions nanométriques et/ou micrométriques, choisies parmi les fibres de verre et les fibres de cellulose, le non tissé présentant une porosité comprise entre 80% et 90% inclus.

2. Accumulateur selon la revendication 1, **caractérisé en ce que** le non tissé est constitué de fibres de verre de dimensions nanométriques et/ou micrométriques.

3. Accumulateur selon la revendication 1, **caractérisé en ce que** le non tissé est constitué de fibres de cellulose de dimensions nanométriques et/ou micrométriques.

4. Accumulateur selon l'une quelconque des revendications 1 à 3, **caractérisé en ce que** le matériau actif d'électrode négative est Li₄Ti₅O₁₂.

5. Accumulateur selon l'une quelconque des revendications 1 à 4, **caractérisé en ce que** le non tissé présente une épaisseur comprise entre environ 50 micromètres pour une porosité de 80% et environ 76 micromètres pour une porosité de 90%.

6. Accumulateur selon la revendication 5, **caractérisé en ce que** la porosité et l'épaisseur du non tissé sont comprises dans le parallélogramme A2B2C2D2 de coordonnées :
A2 : 80% de porosité pour une épaisseur d'environ 50µm
B2 : 80% de porosité pour une épaisseur d'environ 70µm
C2 : 90% de porosité pour une épaisseur d'environ 56µm
D2 :90% de porosité pour une épaisseur d'environ 76µm.

## Patentansprüche

1. Lithiumionenakkumulator,
**dadurch gekennzeichnet,**
**dass** er enthält:
- LiFePO₄ als aktives Material der positiven Elektrode,
- ein aktives Material der negativen Elektrode, das ein Einlagerungs-/Auslagerungspotential für das Lithium von mehr als oder gleich 0,5V vs. Li⁺/Li besitzt und unter einem lithiumhaltigen Titanoxid, einem Derivat eines lithiumhaltigen Titanoxids, einem nicht lithiumhaltigen Titanoxid, einem Derivat eines nicht lithiumhaltigen Titanoxids und einem Gemisch von diesen gewählt wird,
- und ein zwischen der positiven und der negativen Elektrode angeordnetes Separatorelement, das aus einem nichtgewebten Stoff auf Basis von Fasern im nanometrischen und/oder mikrometrischen Größenbereich besteht, welche unter Glasfasern und Zellulosefasern gewählt werden, wobei der nichtgewebte Stoff eine Porosität von 80% bis 90% einschließlich aufweist.

2. Akkumulator nach Anspruch 1,
**dadurch gekennzeichnet,**
**dass** der nichtgewebte Stoff aus Glasfasern im nanometrischen und/oder mikrometrischen Größenbereich gebildet ist.

3. Akkumulator nach Anspruch 1,
**dadurch gekennzeichnet,**
**dass** der nichtgewebte Stoff aus Zellulosefasern im nanometrischen und/oder mikrometrischen Größenbereich gebildet ist

4. Akkumulator nach einem der Ansprüche 1 bis 3,
**dadurch gekennzeichnet,**
**dass** es sich bei dem aktiven Material der negativen Elektrode um Li₄Ti₅O₁₂ handelt.

5. Akkumulator nach einem der Ansprüche 1 bis 4,
**dadurch gekennzeichnet,**
**dass** der nichtgewebte Stoff eine Stärke von ca. 50 Mikrometern bei einer Porosität von 80% bis ca. 76 Mikrometern bei einer Porosität von 90% aufweist.

6. Akkumulator nach Anspruch 5,
**dadurch gekennzeichnet,**
**dass** die Porosität und die Stärke des nichtgewebten Stoffs innerhalb des Koordinaten-Parallelogramms A2B2C2D2 liegen:
A2 : 80% Porosität bei einer Stärke von ca. 50 µm
B2 : 80% Porosität bei einer Stärke von ca. 70 µm
C2 : 90% Porosität bei einer Stärke von ca. 56 µm
D2 : 90% Porosität bei einer Stärke von ca. 76 µm.

## Claims

1. Lithium-Ion storage Battery **characterized in that** it comprises:
- LiFePO₄ as active material for a positive electrode,
- an active material for a negative electrode having a lithium insertion/extraction potential equal to or greater than 0.5 V vs. Li⁺/Li, chosen from a lithiated titanium oxide, a derivative of a lithiated titanium oxide, a non lithiated titanium oxide, a derivative of a non lithiated titanium oxide and a mixture thereof,
- and a separating element placed between the positive and negative electrodes, formed from a non-woven fabric containing fibers of nanometric and/or micrometric size, chosen from cellulose fibers and glass fibers, the non-woven fabric having a porosity between 80% and 90% included.

2. Battery according to claim 1, **characterized in that** the non-woven fabric consists of glass fibers of nanometric and/or micrometric size.

3. Battery according to claim 1, **characterized in that** the non-woven fabric consists of cellulose fibers of nanometric and/or micrometric size.

4. Battery according to any one of the claims 1 to 3, **characterized in that** the active material for the negative electrode is Li₄Ti₅O₁₂.

5. Battery according to any one of the claims 1 to 4, **characterized in that** the non-woven fabric has a thickness between approximately 50 micrometers for a porosity of 80% and approximately 76 micrometers for a porosity of 90%.

6. Battery according to any one of the claims 1 to 4, **characterized in that** the non-woven fabric has a thickness between approximately 50 micrometers for a porosity of 80% and approximately 76 micrometers for a porosity of 90%. 10. Battery according to claim 5, **characterized in that** the porosity and the thickness of the non-woven fabric are included in the parallelogram A2B2C2D2 whose coordinates are:
A2: a porosity of 80% for approximately 50 µm
B2: a porosity of 80% for approximately 70 µm
C2: a porosity of 90% for approximately 56 µm
D2: a porosity of 90% for approximately 76 µm.
